# EUROPÄISCHE PATENTSCHRIFT

(11) **EP 3 943 266 B1**
(45) Veröffentlichungstag und Bekanntmachung des Hinweises auf die Patenterteilung: **08.03.2023**
(21) Anmeldenummer: 21182412.3
(22) Anmeldetag: 29.06.2021
(51) Int. Cl.: B29B 7/82, B29B 7/72, B29B 7/74, B29B 7/00, B29C 48/80, B29C 48/92, B29B 7/28, G01K 1/08, G01K 1/14, G01K 13/02, B29B 7/42, B29B 7/48

(54) **VERFAHREN ZUM MISCHEN EINER KAUTSCHUKMISCHUNG, VORRICHTUNG ZUR DURCHFÜHRUNG DES VERFAHRENS, UND VERWENDUNG DER VORRICHTUNG**
METHOD FOR MIXING A RUBBER MIXTURE, DEVICE FOR CARRYING OUT THE METHOD, AND USE OF THE DEVICE
PROCÉDÉ DE MÉLANGE D'UN MÉLANGE DE CAOUTCHOUC, DISPOSITIF DE MISE EN OEUVRE DU PROCÉDÉ, ET UTILISATION DU DISPOSITIF

(30) Priorität: 21.07.2020 DE 102020209089
(43) Veröffentlichungstag der Anmeldung: 26.01.2022
(73) Patentinhaber: Continental Reifen Deutschland GmbH, 30165 Hannover (DE)
(72) Erfinder: Meyer, Hendrik, 30419 Hannover (DE); Klunker, Sebastian, 30419 Hannover (DE)
(74) Vertreter: Continental Corporation

(56) Entgegenhaltungen:
- DE-A1- 4 014 361
- DE-A1-102018 217 477
- DE-C1- 10 133 495
- JP-A- H 071 559
- JP-A- H05 216 544
- JP-A- 2006 341 478
- KR-B1- 100 329 798
- US-A- 3 369 594
- US-A- 3 866 669

## Beschreibung

Die Erfindung betrifft ein Verfahren zum Mischen einer Kautschukmischung.

Die Erfindung betrifft auch eine Vorrichtung zur Durchführung des Verfahrens und die Verwendung der Vorrichtung.

Im Allgemeinen erfolgt die Herstellung einer Kautschukmischung in mehreren Mischphasen und Mischstufen. Während der Herstellung werden alle Bestandteile der Mischung, wie Kautschuke, Füllstoffe, Verarbeitungshilfsmittel, Alterungsschutzmittel, Ozonschutzmittel und weitere übliche Zusatzstoffe sowie Vulkanisationschemikalien für die zweite Mischstufe (wie z. B. Schwefel, Vulkanisationsbeschleuniger, Harze), miteinander unter Energieeintrag vermischt, wobei sich die Mischung erwärmt.

Für die Sicherung einer konstanten Qualität der gefertigten Kautschukmischung ist eine genaue Temperaturkontrolle während des Mischens von Bedeutung. Im Stand der Technik ist bekannt, innerhalb der Mischkammer z.B. über Thermoelemente die Temperatur der Mischung zu messen. Allerdings ist diese Messung aufgrund der kontinuierlichen Bewegung der Mischung sowie Wechselwirkungen mit der Innenwand der Mischkammer sehr ungenau. Zudem kommt es häufig vor, dass die besagten Thermoelemente nur die Temperatur an der Oberfläche der Kautschukmischung während des Mischens bestimmen. Diese Oberflächentemperatur weicht häufig um bis zu 10 °C von der eigentlichen Bulk-Temperatur der Kautschukmischung, d.h. der Temperatur im Inneren des Kautschukmischungs-Batches. Durch diese Temperaturdifferenz weichen die chemischen Reaktionraten der Kautschukmischungsbestandteile an der Oberfläche und im Inneren der Kautschukmischung stark voneinander ab. Dies kann zu einer inhomogen vermischten Kautschukmischung führen, welche als Folge nachteilige Scorch- oder PreScorch-Eigenschaften oder eine verschlechterte dynamische Steifigkeit aufweisen.

Im Stand der Technik sind zudem verschiedene Vorrichtungen und Verfahren zur Temperaturbestimmung bekannt:
DE 69016750 T2 offenbart ein "System zur Steuerung des Mischens einer Zusammensetzung, die ein Polymermaterial und Additivmaterialien umfaßt, in einem Innenmischer, der mindestens einen drehzahlvariablen Mischerrotor, der zur Rotation in einer Mischkammer angebracht ist, und einen Stößel, der für eine Gleitbewegung in einem zur Mischkammer hin offenen Durchgang angebracht ist, durch den ein variabler Druck auf Materialien in der Mischkammer ausgeübt werden kann, und eine Mischersteuerung zur Steuerung der Rotorgeschwindigkeit und des Stößeldrucks, besitzt" (s. Anspruch 1).

DE 19834804 A1 offenbart eine Kautschukmischung, die zumindest eine Kautschukkomponente und zumindest einen ersten Füllstoff, dessen Oberfläche nucleophile Gruppen, insbesondere OH-gruppen, aufweist sowie weiterhin übliche Zusatzstoffe enthält, dadurch gekennzeichnet, daß die Kautschukmischung als weiteren Füllstoff ein Gel aufweist, das im Wesentlichen aus einem Kautschuk besteht, einer bestimmten Partikelgröße und einen Quellungsindex in Toluol von 1 bis 15 besitzt und dessen Oberfläche elektrophile Zentren aufweist und weiterhin eine als Kupplungsagens zwischen den Gelpartikeln und dem ersten Füllstoff wirkende Substanz mit einer bestimmten Struktur (vgl. Anspruch 1).

DE 3035353 A1 offenbart ein "Verfahren zum Regeln des Mischvorganges von Kautschukmischungen in einem Innenmischer, der zwei in einer Mischkammer achsparallel angeordnete, gegensinnig mitveränderbarer Drehzahl antreibbare Schaufeln mit Förder- und Mischflügeln aufweist und der mit einem druckbeaufschlagbaren Stempel zum Verschließen des Mischraumes versehen ist, wobei die Temperatur des Mischvorganges geregelt wird, dadurch gekennzeichnet, daß eine Steuerung des Mischungsablaufes nach Energiemarken und eine überlagerte Soll-Ist-Wert-Folgeregelung der Mischungstemperatur über der der Mischung zugeführten spezifischen Energie vorgenommen werden, wobei als Stellgröße für die Temperatur die Schaufeldrehzahl und/oder der Stempeldruck dienen" (s. Anspruch 1).

Die KR100329798B1 betrifft eine Vorrichtung zum Erfassen der Temperatur eines Gummimischers, eine Temperaturmeßeinheit zum Messen der Temperatur in der Kammer des Mischers und zum Vorheizen der Temperatur der Temperaturmeßeinheit auf eine vorbestimmte Solltemperatur, eine Heizvorrichtung zum Steuern der Temperatur, eine Heizvorrichtungstemperaturmeßeinheit zum Erfassen der Temperatur der Heizvorrichtung, und ein Gehäuse, in dem die Temperaturmeßeinheit, die Heizvorrichtung und die Heizvorrichtungstemperaturmeßeinheit untergebracht sind.

Die DE102018217477A1 betrifft eine Vorrichtung zum Mischen einer unvulkanisierten Kautschukmischung, umfassend wenigstens eine Mischkammer, wenigstens eine Einfüllöffnung zum Einfüllen von Kautschuk sowie weiteren Zusatzstoffen in die Mischkammer, wenigstens einen Rotor zum Mischen des Kautschuks mit den weiteren Zusatzstoffen zu einer Kautschukmischung, wenigstens eine Auslassklappe zum Auslassen der Kautschukmischung und wenigstens einen Schacht unterhalb der Auswurfklappe zum Auslassen der Kautschukmischung, wobei die Vorrichtung wenigstens einen verschiebbaren Temperatur-Sensor innerhalb des Schachtes zur Bestimmung der Temperatur innerhalb der ausgelassenen Kautschukmischung aufweist. Außerdem wird eine Verwendung eines Temperatur-Sensors innerhalb einer Mischkammer und eines verschiebbaren Temperatur-Sensors zum Einstellen der Temperatur der Kautschukmischung in der Mischkammer während des Mischens offenbart.

Der Erfindung liegt daher als eine primäre Aufgabe zu Grunde, eine Vorrichtung zum Mischen einer unvulkanisierten Kautschukmischung bereitzustellen, die eine sichere und zuverlässige Bestimmung der Temperatur der Kautschukmischung nach dem Mischen ermöglicht. Hierbei soll die Vorrichtung eine sichere und zuverlässige Qualitätskontrolle der Kautschukmischung gewährleisten. Unter zuverlässig ist insbesondere zu verstehen, dass die Bestimmung der Temperatur reproduzierbar und repräsentativ für die gesamte Kautschukmischung sein soll, wobei insbesondere bei mehreren hintereinander hergestellten Batchen der gleichen Kautschukzusammensetzung konstante Herstellungsbedingungen gewährleistet werden sollen.

Gelöst wird diese Aufgabe erfindungsgemäß durch ein Verfahren nach Anspruch 1 zum Mischen einer Kautschukmischung, umfassend die folgenden Schritte:
A) Bereitstellen eines Mischers, wobei der Mischer eine Mischkammer und mindestens einen in der Mischkammer angeordneten Mischrotor aufweist, wobei die Mischkammer des Mischers von einem Kammergehäuse, einer ersten Einfüllöffnung und einer ersten Auswurföffnung begrenzt wird und einen oder mehrere im Kammergehäuse angeordnete Sensoren zum Messen der Temperatur einer Kautschukmischung innerhalb der Mischkammer aufweist, wobei die Oberfläche der Sensoren, welche innerhalb der Mischkammer angeordnet sind, mit einer Materialschicht ummantelt oder beschichtet ist,
B) Erwärmen der Materialschicht des einen oder der mehreren Sensoren mittels einer oder mehrerer in der Materialschicht integrierter Heizeinheiten,
C) Hinzufügen von mindestens einem Kautschuk und mindestens einem weiteren Kautschukmischungsbestandteil in die Mischkammer des Mischers,
D)Vermischen des mindestens einen Kautschuks mit dem mindestens einen weiteren Kautschukmischungsbestandteil in dem Mischer, sodass eine Kautschukmischung entsteht,
   und
E) Messen der Temperatur der Kautschukmischung mittels des einen oder der mehreren in Schritt B) erwärmten Sensoren während des Schrittes D).

Bei im Stand der Technik verwendeten Mischverfahren geschieht das Vorheizen der Mischkammer durch Wärme aus mechanischem Mischen der Kautschukmischungsbestandteile. Je nachdem ob die Mischkammer bereits auf Betriebstemperatur, dies sind normalerweise ca. 100 °C oder noch bei Raumtemperatur ist, wird hierbei die durch das Vorheizen freiwerdende Energie entweder an das Kammergehäuse der Mischkammer abgegeben bzw. zum Heizen der aus den Kautschukmischungsbestandteilen entstehenden Kautschukmischung verwendet. Aufgrund dieser verloren gegangen Wärmeenergie, wenn eine Mischkammer aus dem Ruhestand wieder zum ersten Mal verwendet wird, weichen die Mischungseigenschaften der entstehenden Kautschukmischung von solchen Kautschukmischungen ab, welche in einer Mischkammer hergestellt wurden, welche von Anfang an auf Betriebstemperatur war. Bisherige Lösungsansätze scheiterten regelmäßig daran, dass versuchte wurde das Kammergehäuse der Mischkammer vorzuwärmen, was jedoch zu einer unbefriedigend langen Aufheizzeit und damit Stillstandzeit des Mischers führte. Ohne eine entsprechende Vorfahrwärmung konnten die in der Mischkammer angeordneten Temperaturfühler jedoch keine ausreichend genauen Temperaturen ermitteln und somit die bereits in die angemischte Kautschukmischung eingetragene Energie nicht ausreichend genau ermittelt werden, da die gemessene Temperatur der realen Temperatur "hinterherhinkt". Dies führte dann zu den vorstehend beschriebenen ungewollten Qualitätsschwankungen in der resultierenden Kautschukmischung und in den daraus resultierenden technischen Gummiprodukten. Aufgrund des Temperaturhinterherhinkens des Fühlers wird die Berechnung des Ist-Energieeintrags beim ersten Batch verfälscht, da die Temperaturmessung eine geringere Energie anzeigt als die reale Temperatur der Kautschukmischung.

Es ist daher eine Leistung der vorliegenden Erfindung herausgefunden zu haben, die vorstehend beschriebenen Probleme, welche auch First-Batch-Effekte genannt werden, dadurch zu beheben, dass nur die Ummantelung des Temperaturfühler innerhalb der Mischkammer vorgewärmte wird. Auf diese Weise kann schnell eine zuverlässige Temperaturmessung der in der Mischkammer angemischten Kautschukmischung erhalten werden und je nach Temperaturverlauf der Kautschukmischung während des Mischens in einem Schritt D) eines erfindungsgemäßen Verfahrens ausreichend genau gemessen werden wie viel Energie an die Kautschukmischung und wie viel Energie beim Mischen an das Kammergehäuse abgegeben wurde. Je nachdem wie das Verhältnis der vorstehenden Energieeinträge an die Kautschukmischung zu dem Kammergehäuse ausfielen, kann die Kautschukmischung in einem erfindungsgemäßen Verfahren aufgrund der zuverlässige Temperaturmessung länger gemischt werden, bis ausreichend genug Energie eingetragen wurde, d.h. den meisten Fällen eine ausreichende Mischungstemperatur erreicht wurde. Die Qualitätsschwankungen aufgrund des vorstehend beschriebenen First-Batch-Effekts konnten somit behoben werden.

Den Vorteil der vorliegenden Erfindung kann man beispielsweise daran erkennen, dass die Vulkanisationszeit t₁₀ der entstehenden Kautschukmischung in nicht-vorgewärmten erfindungsgemäßen Vorrichtungen bis zu 10 % kürzer als bei Kautschukmischungen, welche mittels einer nicht-vorgewärmten nicht-erfindungsgemäßen Vorrichtung hergestellt werden.

Bevorzugt ist ein Verfahren wie vorstehend beschrieben oder wie vorstehend als bevorzugt beschrieben, wobei die Zeit zum Vermischen während Schritt D) in Abhängigkeit des oder der gleichzeitig stattfindenden in Schritts E) gemessenen Temperaturmesswerte gesteuert oder geregelt wird, wobei die Regelung der Zeit zum Vermischen während Schritt D) bevorzugt mittels einer entsprechenden Regeleinheit durchgeführt wird. Eine solche Regeleinheit sind beispielsweise Regeleinheiten (im Englischen: control units, kurz: ECU) mit dem Produktnamen PCS7 oder TIA Portal.

Den Vorteil des vorstehend beschriebenen Aspekts der vorliegenden Erfindung ist, dass die Zeit zum Vermischen während des Schrittes D) eines erfindungsgemäßen Verfahrens präzise so lange eingestellt werden kann, dass individuell für jeden einzelnen Kautschukmischungsbatch die vorstehend gesagten Probleme aus dem Stand der Technik behoben werden kann. Mit der vorstehend beschriebenen Regeleinheit kann dies sogar quantitativ und nicht nur qualitativ geschehen.

Bevorzugt ist ein Verfahren wie vorstehend beschrieben oder wie vorstehend als bevorzugt beschrieben, wobei die Materialschicht in Schritt B) auf eine Temperatur im Bereich von 100 °C bis 180 °C, erwärmt wird, bevorzugt auf eine Temperatur im Bereich von 120 °C bis 165 °C.

Ein Vorteil des vorstehend beschriebenen Aspekts der vorliegenden Erfindung ist, dass in diesen Temperaturbereichen die vorstehend beschriebenen vorteilhaften Effekte besonders stark sind.

Bevorzugt ist ein Verfahren wie vorstehend beschrieben oder wie vorstehend als bevorzugt beschrieben, wobei die Materialschicht aus einem Material besteht ausgesucht aus der Gruppe bestehend aus Eisen, Stahl und Kupfer, bevorzugt ist das Material Stahl, besonders bevorzugt Edelstahl, ganz besonders bevorzugt Edelstahl 1.4571 mit der Zusammensetzung AISI 316Ti).

Ein Vorteil des vorstehend beschriebenen Aspekts der vorliegenden Erfindung ist, dass aufgrund der vorstehend beschriebenen Materialien besonders schnell die reale Temperatur der in der Mischkammer gemischten Kautschukmischung gemessen werden kann.

Bevorzugt ist ein Verfahren wie vorstehend beschrieben oder wie vorstehend als bevorzugt beschrieben, wobei die Stärke der Materialschicht im Bereich von 0,1 bis 100 mm liegt, bevorzugt im Bereich von 3 bis 7 mm.

Ein Vorteil des vorstehend beschriebenen Aspekts der vorliegenden Erfindung ist, dass aufgrund der geringeren Wärmeübertragung und bei den vorstehend beschriebenen Stärken besonders schnell die reale Temperatur der in der Mischkammer gemischten Kautschukmischung gemessen werden kann.

Bevorzugt ist ein Verfahren wie vorstehend beschrieben oder wie vorstehend als bevorzugt beschrieben, wobei die integrierten Heizeinheiten mindestens eine elektrisch heizbare Wärmespirale ist, wobei die Wärmespirale bevorzugt helikal um den einen oder die mehreren Sensoren gedreht ist. Bevorzugt besteht die vorstehend beschriebene Wärmespirale dabei aus Wolfram oder einem Metall, welches eine spezifischen Wärmeleitfähigkeit im Bereich von 90 % bis 110 % der spezifischen Wärmeleitfähigkeit von Wolfram aufweist, wobei die spezifischen Wärmeleitfähigkeit bevorzugt gemäß Methode DIN EN 1946-3:1999 - Teil 3 gemessen wird, die unterschiedlichen, existierenden Methoden jedoch jeweils das gleiche Ergebnis liefern.

Ein Vorteil des vorstehend beschriebenen Aspekts der vorliegenden Erfindung ist, dass aufgrund der gleichmäßigen Wärmeübertragung die Ummantelung des Temperatursensors besonders gleichmäßig erwärmt werden kann und somit besonders zuverlässig die reale Temperatur der in der Mischkammer gemischten Kautschukmischung gemessen werden kann.

Die vorstehend beschriebenen vorteilhaften Aspekte eines erfindungsgemäßen Verfahrens zum Mischen einer Kautschukmischung gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zum Mischen einer Kautschukmischung.

Die Erfindung betrifft auch eine Vorrichtung nach Anspruch 7 zur Durchführung eines Verfahrens wie vorstehend beschrieben, wobei die Vorrichtung umfasst:
einen Mischer, wobei der Mischer eine Mischkammer und mindestens einen in der Mischkammer angeordneten Mischrotor aufweist, wobei die Mischkammer des Mischers von einem Kammergehäuse, einer ersten Einfüllöffnung und einer ersten Auswurföffnung begrenzt wird und einen oder mehrere im Kammergehäuse angeordnete Sensoren zum Messen der Temperatur einer Kautschukmischung innerhalb der Mischkammer aufweist, wobei die Oberfläche der Sensoren, welche innerhalb der Mischkammer angeordnet sind, mit einer Materialschicht ummantelt oder beschichtet ist,
gekennzeichnet durch eine oder mehrere in der Materialschicht integrierte Heizeinheiten zum Erwärmen der Materialschicht des einen oder der mehreren Sensoren und optional
eine Regeleinheit zum Regeln der Zeit zum Vermischen einer Kautschukmischung in der Mischkammer in Abhängigkeit des oder der mehreren Sensoren gemessenen Temperaturmesswerte.

Die vorstehend beschriebenen vorteilhaften Aspekte einer erfindungsgemäßen Vorrichtung zur Durchführung eines erfindungsgemäßen Verfahrens und eines erfindungsgemäßen Verfahrens zum Mischen einer Kautschukmischung gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zur Durchführung eines erfindungsgemäßen Verfahrens und eines erfindungsgemäßen Verfahrens zum Mischen einer Kautschukmischung.

Die Erfindung betrifft auch eine Verwendung der Vorrichtung nach Anspruch 8 zur Herstellung einer Kautschukmischung.

Weitere bevorzugte Ausführungen sind Gegenstand der abhängigen Ansprüche.

### Figurenbeschreibung:

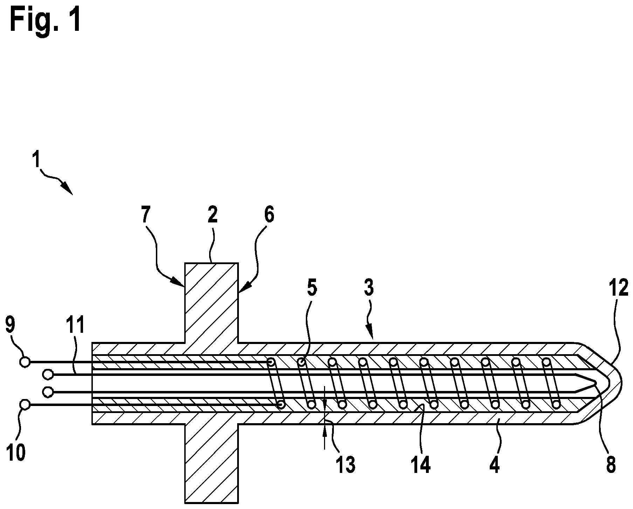

Figur 1 zeigt einen Sensor 1 einer erfindungsgemäßen Vorrichtung in einer ersten Ausführungsform, welcher durch das Kammergehäuse 2 einer Mischkammer hindurch verläuft und mit diesem stoffschlüssig verbunden ist. Der Sensor 1 ist von einer Materialschicht 4 in dem innerhalb der Mischkammer liegenden Teil des Sensors 1 ummantelt. Innerhalb der Ummantelung denn Materialschicht 4 ist eine elektrisch heizbare Wärmespirale 5 mit zwei Stromanschlüssen 9, 10 angeordnet. Innerhalb der elektrisch heizbaren Wärmespirale 5 sind die elektrischen Verbindungen 11, welche in der Sensorspitze 12 die Temperatursignalaufnahmeeinheit 8 bilden, angeordnet, wobei sich die elektrisch heizbare Wärmespirale 5 innerhalb des einen Sensors 1 helikal um die Verbindungen 11 erstreckt, sodass die elektrisch heizbare Wärmespirale 5 entlang der Innenwand 14 der Ummantelung 4 des Sensors 1 verlaufen.

### Bezugszeichenliste:

- 1: Sensoren zum Messen der Temperatur einer Kautschukmischung innerhalb der Mischkammer; Temperatursensor
- 2: Kammergehäuse
- 3: Oberfläche der Sensoren
- 4: Ummantelung des Sensor; Materialschicht
- 5: integrierte Heizeinheiten, elektrisch heizbare Wärmespirale
- 6: Innenwand des Kammergehäuse
- 7: Außenwand des Kammergehäuse
- 8: Temperatursignalaufnahmeeinheit in der Spitze des Temperatursensors 1
- 9: Stromanschluss
- 10: Stromanschluss
- 11: elektrischen Verbindungen
- 12: Sensorspitze
- 13: Stärke der Ummantelung des Sensors oder der Materialschicht
- 14: Innenwand der Ummantelung des Sensors

## Patentansprüche

1. Verfahren zum Mischen einer Kautschukmischung, umfassend die folgenden Schritte:
A) Bereitstellen eines Mischers, wobei der Mischer eine Mischkammer und mindestens einen in der Mischkammer angeordneten Mischrotor aufweist, wobei die Mischkammer des Mischers von einem Kammergehäuse (2), einer ersten Einfüllöffnung und einer ersten Auswurföffnung begrenzt wird und einen oder mehrere im Kammergehäuse angeordnete Sensoren (1) zum Messen der Temperatur einer Kautschukmischung innerhalb der Mischkammer aufweist, wobei die Oberfläche (3) der Sensoren, welche innerhalb der Mischkammer angeordnet sind, mit einer Materialschicht (4) ummantelt oder beschichtet ist,
B) Erwärmen der Materialschicht (4) des einen oder der mehreren Sensoren (1) mittels einer oder mehrerer in der Materialschicht (4) integrierter Heizeinheiten (5),
C) Hinzufügen von mindestens einem Kautschuk und mindestens einem weiteren Kautschukmischungsbestandteil in die Mischkammer des Mischers,
D)Vermischen des mindestens einen Kautschuks mit dem mindestens einen weiteren Kautschukmischungsbestandteil in dem Mischer, sodass eine Kautschukmischung entsteht,
und
E) Messen der Temperatur der Kautschukmischung mittels des einen oder der mehreren in Schritt B) erwärmten Sensoren (1) während des Schrittes D).

2. Verfahren nach Anspruch 1, wobei die Materialschicht in Schritt B) auf eine Temperatur im Bereich von 100 °C bis 180 °C, erwärmt wird, bevorzugt auf eine Temperatur im Bereich von 120 °C bis 165 °C.

3. Verfahren nach einem der vorangehenden Ansprüche, wobei die Materialschicht (4) aus einem Material besteht ausgesucht aus der Gruppe bestehend aus Eisen, Stahl und Kupfer, bevorzugt ist das Material Stahl, besonders bevorzugt Edelstahl, ganz besonders bevorzugt Edelstahl 1.4571 mit der Zusammensetzung AISI 316Ti).

4. Verfahren nach einem der vorangehenden Ansprüche, wobei die Stärke (13) der Materialschicht im Bereich von 0,1 bis 100 mm liegt, bevorzugt im Bereich von 3 bis 7 mm.

5. Verfahren nach einem der vorangehenden Ansprüche, wobei die Zeit zum Vermischen während Schritt D) in Abhängigkeit des oder der gleichzeitig stattfindenden in Schritts E) gemessenen Temperaturmesswerte gesteuert oder geregelt wird, wobei die Regelung der Zeit zum Vermischen während Schritt D) bevorzugt mittels einer entsprechenden Regeleinheit durchgeführt wird.

6. Verfahren nach einem der vorangehenden Ansprüche, wobei die integrierten Heizeinheiten (5) mindestens eine elektrisch heizbare Wärmespirale ist, wobei sich jede Wärmespirale bevorzugt innerhalb des entsprechenden Sensors (1) helikal erstreckt, sodass die Wärmespirale besonders bevorzugt entlang der Innenwand (14) der Ummantelung (5) des Sensors (1) verlaufen.

7. Vorrichtung zur Durchführung eines Verfahrens nach einem der vorangehenden Ansprüche, wobei die Vorrichtung umfasst:
- einen Mischer, wobei der Mischer eine Mischkammer und mindestens einen in der Mischkammer angeordneten Mischrotor aufweist, wobei die Mischkammer des Mischers von einem Kammergehäuse (2), einer ersten Einfüllöffnung und einer ersten Auswurföffnung begrenzt wird und einen oder mehrere im Kammergehäuse angeordnete Sensoren (1) zum Messen der Temperatur einer Kautschukmischung innerhalb der Mischkammer aufweist, wobei die Oberfläche (3) der Sensoren, welche innerhalb der Mischkammer angeordnet sind, mit einer Materialschicht (4) ummantelt oder beschichtet ist, **gekennzeichnet durch**
- eine oder mehrere in der Materialschicht (4) integrierte Heizeinheiten (5) zum Erwärmen der Materialschicht (4) des einen oder der mehreren Sensoren (1)
und optional
- Regeleinheit zum Regeln der Zeit zum Vermischen einer Kautschukmischung in der Mischkammer in Abhängigkeit des oder der mehreren Sensoren (1) gemessenen Temperaturmesswerte.

8. Verwendung der Vorrichtung nach Anspruch 7 zur Herstellung einer Kautschukmischung.

## Claims

1. Method for mixing a rubber mixture, comprising the following steps:
A) providing a mixer, wherein the mixer has a mixing chamber and at least one mixing rotor arranged in the mixing chamber, wherein the mixing chamber of the mixer is delimited by a chamber housing (2), a first filling opening and a first ejection opening and has one or more sensors (1) which is/are arranged in the chamber housing and is/are intended for measuring the temperature of a rubber mixture within the mixing chamber, wherein the surface (3) of the sensors that are arranged within the mixing chamber is sheathed or coated with a material layer (4),
B) heating the material layer (4) of the one or more sensors (1) by means of one or more heating units (5) integrated in the material layer (4),
C) adding at least one rubber and at least one further rubber mixture constituent to the mixing chamber of the mixer,
D) blending the at least one rubber with the at least one further rubber mixture constituent in the mixer, with the result that a rubber mixture is produced,
and,
E) during step D), measuring the temperature of the rubber mixture by means of the one or more sensors (1) heated in step B).

2. Method according to Claim 1, wherein the material layer is heated to a temperature in the range of 100°C to 180°C, preferably to a temperature in the range of 120°C to 165°C, in step B).

3. Method according to either of the preceding claims, wherein the material layer (4) consists of a material selected from the group consisting of iron, steel and copper, the material is preferably steel, particularly preferably stainless steel, very particularly preferably stainless steel 1.4571 with the composition AISI 316Ti.

4. Method according to one of the preceding claims, wherein the thickness (13) of the material layer is in the range of 0.1 to 100 mm, preferably in the range of 3 to 7 mm.

5. Method according to one of the preceding claims, wherein the blending duration during step D) is controlled in open-loop or closed-loop fashion depending on the one or more temperature measurement values that occur at the same time and are measured in step E), wherein the regulation of the blending duration during step D) is preferably carried out by a corresponding regulating unit.

6. Method according to one of the preceding claims, wherein the integrated heating units (5) are at least one electrically heatable heating coil, wherein each heating coil preferably extends helically within the corresponding sensor (1), with the result that the heating coils particularly preferably run along the inner wall (14) of the sheath (5) of the sensor (1).

7. Device for carrying out a method according to one of the preceding claims, wherein the device comprises:
- a mixer, wherein the mixer has a mixing chamber and at least one mixing rotor arranged in the mixing chamber, wherein the mixing chamber of the mixer is delimited by a chamber housing (2), a first filling opening and a first ejection opening and has one or more sensors (1) which are arranged in the chamber housing and are intended for measuring the temperature of a rubber mixture within the mixing chamber, wherein the surface (3) of the sensors that are arranged within the mixing chamber is sheathed or coated with a material layer (4), **characterized by**
- one or more heating units (5) which are integrated in the material layer (4) and are intended for heating the material layer (4) of the one or more sensors (1),
and optionally
- a control unit for controlling the blending duration of a rubber mixture in the mixing chamber in closed-loop fashion depending on temperature measurement values measured the one or more sensors (1).

8. Use of the device according to Claim 7 for preparing a rubber mixture.

## Revendications

1. Procédé de mélange d'un mélange de caoutchouc, comprenant les étapes suivantes :
A) la fourniture d'un mélangeur, le mélangeur présentant une chambre de mélange et au moins un rotor de mélange agencé dans la chambre de mélange, la chambre de mélange du mélangeur étant délimitée par une enceinte de chambre (2), une première ouverture de remplissage et une première ouverture d'éjection, et présentant un ou plusieurs capteurs (1) agencés dans l'enceinte de chambre pour mesurer la température d'un mélange de caoutchouc à l'intérieur de la chambre de mélange, la surface (3) des capteurs qui sont agencés à l'intérieur de la chambre de mélange étant enrobée ou revêtue d'une couche de matériau (4),
B) le chauffage de la couche de matériau (4) du ou des capteurs (1) au moyen d'une ou de plusieurs unités de chauffage (5) intégrées dans la couche de matériau (4),
C) l'ajout d'au moins un caoutchouc et d'au moins un autre constituant du mélange de caoutchouc dans la chambre de mélange du mélangeur,
D) le mélange de l'au moins un caoutchouc avec l'au moins un autre constituant du mélange de caoutchouc dans le mélangeur de telle sorte qu'un mélange de caoutchouc se forme,
et
E) la mesure de la température du mélange de caoutchouc au moyen du ou des capteurs (1) chauffés à l'étape B) pendant l'étape D).

2. Procédé selon la revendication 1, dans lequel la couche de matériau est chauffée à l'étape B) à une température dans la plage allant de 100 °C à 180 °C, de préférence à une température dans la plage allant de 120 °C à 165 °C.

3. Procédé selon l'une quelconque des revendications précédentes, dans lequel la couche de matériau (4) est constituée d'un matériau choisi dans le groupe constitué par le fer, l'acier et le cuivre, de préférence le matériau est l'acier, de manière particulièrement préférée l'acier inoxydable, de manière tout particulièrement préférée l'acier inoxydable 1.4571 de composition AISI 316Ti).

4. Procédé selon l'une quelconque des revendications précédentes, dans lequel l'épaisseur (13) de la couche de matériau se situe dans la plage allant de 0,1 à 100 mm, de préférence dans la plage allant de 3 à 7 mm.

5. Procédé selon l'une quelconque des revendications précédentes, dans lequel le temps de mélange pendant l'étape D) est commandé ou régulé en fonction de la ou des valeurs de mesure de température mesurées simultanément à l'étape E), la régulation du temps de mélange pendant l'étape D) étant de préférence réalisée au moyen d'une unité de régulation correspondante.

6. Procédé selon l'une quelconque des revendications précédentes, dans lequel les unités de chauffage intégrées (5) sont au moins un serpentin chauffant électriquement, chaque serpentin chauffant s'étendant de préférence en hélice à l'intérieur du capteur correspondant (1), de telle sorte que les serpentins chauffants s'étendent de manière particulièrement préférée le long de la paroi intérieure (14) de l'enrobage (5) du capteur (1).

7. Dispositif pour réaliser un procédé selon l'une quelconque des revendications précédentes, le dispositif comprenant :
- un mélangeur, le mélangeur présentant une chambre de mélange et au moins un rotor de mélange agencé dans la chambre de mélange, la chambre de mélange du mélangeur étant délimitée par une enceinte de chambre (2), une première ouverture de remplissage et une première ouverture d'éjection, et présentant un ou plusieurs capteurs (1) agencés dans l'enceinte de chambre pour mesurer la température d'un mélange de caoutchouc à l'intérieur de la chambre de mélange, la surface (3) des capteurs qui sont agencés à l'intérieur de la chambre de mélange étant enrobée ou revêtue d'une couche de matériau (4), **caractérisé par**
- une ou plusieurs unités de chauffage (5) intégrées dans la couche de matériau (4) pour chauffer la couche de matériau (4) du ou des capteurs (1),
et en option
- une unité de régulation pour réguler le temps de mélange d'un mélange de caoutchouc dans la chambre de mélange en fonction de la ou des valeurs de mesure de température mesurées par le ou les capteurs (1).

8. Utilisation du dispositif selon la revendication 7 pour la production d'un mélange de caoutchouc.
